# EUROPÄISCHE PATENTSCHRIFT

(11) **EP 3 585 850 B1**
(45) Veröffentlichungstag und Bekanntmachung des Hinweises auf die Patenterteilung: **25.11.2020**
(21) Anmeldenummer: 18708088.2
(22) Anmeldetag: 26.02.2018
(51) Int. Cl.: C09J 7/24, B65D 63/10, C08L 23/10, C08L 23/12, C08L 23/14, C08L 23/16

(54) **KLEBEBAND**
ADHESIVE TAPE
RUBAN ADHÉSIF

(30) Priorität: 24.02.2017 DE 102017203066
(43) Veröffentlichungstag der Anmeldung: 01.01.2020
(73) Patentinhaber: TESA SE, 22848 Norderstedt (DE)
(72) Erfinder: SCHUBERT, Anna, 22850 Norderstedt (DE); KLINGEBERG, Kerstin, 22527 Hamburg (DE); NEUBERT, Ingo, 22850 Norderstedt (DE)
(86) Internationale Anmeldenummer: PCT/EP2018/054642
(87) Internationale Veröffentlichungsnummer: WO 2018/154103

(56) Entgegenhaltungen:
- EP-A1- 1 376 516
- WO-A1-2015/118138
- US-A1- 2006 258 811

## Beschreibung

Die Erfindung betrifft ein Klebeband.

So genannte Strapping-Klebebänder sind insbesondere zum Bündeln von Gegenständen geeignet. Solche Gegenstände sind zum Beispiel Rohre, Profile oder gestapelte Kartons (Strapping-Anwendung).

Des Weiteren zählt zu den Strapping-Anwendungen die Fixierung beweglicher Teile an Weißgeräten (wie Kühl- und Gefriergeräten oder Klimageräten), an Rotgeräten wie (Gas-)herden und allgemein an Elektrogeräten wie beispielsweise Druckern.

Im Fachjargon werden die Bereiche wie folgt bezeichnet:
- Bereich Appliance: Fixierung beweglicher Teile von Kühl- und Gefriergeräten und anderer Haushaltsgeräte wie Gasherde etc.
- Bereich Office Automation: Fixierung beweglicher Teile von Druckern, Kopiergeräten etc.

Weitere Anwendungen derartiger Klebebänder sind
a) die temporäre Fixierung von größeren Bauteilen wie zum Beispiel Windschutzscheiben von Autos nach dem Einsetzen in den Rahmen bis zur Aushärtung des PU-Flüssigklebers, um ein Verrutschen während des Aushärteprozesses zu verhindern,
b) das so genannte Endtabbing (Endlagenverklebung) von Metall-Coils mit dem Anspruch der rückstandsfreien Wiederablösbarkeit auch bei niedrigen Temperaturen,
c) das temporäre Verschließen von Behältern oder generelles Bekleben von Oberflächen mit der Anforderung auf rückstandsfreie Wiederablösbarkeit auch bei niedrigen Temperaturen.

Die rückstandsfreie Entfernbarkeit (Wiederablösbarkeit) eines (Strapping-)Tapes von verschiedenen Untergründen hängt wesentlich von den Abzugskräften ab, die sich nach unterschiedlichen Zeiträumen beim Ablösen des Bandes von den jeweiligen Untergründen entwickeln. Idealerweise nimmt die Abzugskraft im Vergleich zur anfänglichen nur geringfügig oder sogar gar nicht zu, da mit zunehmender Abzugskraft das Risiko steigt, dass entweder der Träger reißt oder Rückstände zurück bleiben. So kann der Folienträger im Falle zu hoher Kräfte versagen und reißen und/oder aufspleißen. Weitere Resultate zu hoher Abzugskräfte können entweder das kohäsive Spalten der Klebmasse oder auch das adhäsive Versagen der Masse durch Ablösen vom Träger sein.

In allen Fällen ergeben sich unerwünschte Rückstände des Klebebandes auf dem Untergrund, sei es in Form von Teilen des Bandes an sich oder von Teilen der Klebmasse.

Es besteht insofern der Bedarf an einem Strapping-Klebeband, welches universell auf allen für die Anwendung relevanten Untergründen angewendet werden kann wie zum Beispiel die Kunststoffe ABS, PS, PP, PE, PC, POM, wie verschiedene Metalle, wie lösemittel-, wasserbasierte und als Pulver aufgetragene Lacke und andere lösungsmittelfreie Lacke (zum Beispiel UV-härtende Lacke), welches gleichzeitig auf diesen Untergründen mit ausreichend hohen Klebkräften von in der Regel mindestens 2,5 N/cm sicher klebt, aber dennoch rückstandsfrei und beschädigungsfrei auch nach längerer Lagerung bei unterschiedlichen Temperaturen (Temperaturbereich: -20 °C bis +60 °C) und UV-Bestrahlung entfernt werden kann.

Obwohl Strapping-Klebebänder in sehr verschiedenen Anwendungen genutzt werden, haben sie einige wesentliche Eigenschaften, damit sie die besonderen an sie gestellten Anforderungen erfüllen. Dies sind - ohne dass diese Aufstellung den Anspruch auf Vollständigkeit erhebt - eine sehr hohe Zugfestigkeit (Höchstzugkraft), eine sehr gute Dehnresistenz entsprechend einem hohen Modul bei geringen Dehnungen und eine geringe Reißdehnung, eine ausreichende aber nicht zu hohe Klebkraft, eine dosierte Klebkraft auf der eigenen Rückseite, die rückstandsfreie Wiederablösbarkeit nach den Beanspruchungen der eigentlichen Anwendung, die Robustheit des Trägers gegenüber mechanischer Belastung und für einige Anwendungen auch noch die Beständigkeit des Klebebandes gegenüber UV-Bestrahlung und gegen viele Chemikalien.

Während einige der Eigenschaften auf die Klebmasse oder andere Funktionsschichten des Klebebands zurückzuführen sind, so basieren die Dehnbarkeit und die Zugfestigkeit wesentlich auf den physikalischen Eigenschaften des verwendeten Trägermaterials.

Nicht unerwähnt bleiben soll an dieser Stelle auch ein weiterer Nachteil der erhöhten Klebkräfte von Strapping-Klebebändern. Dieser besteht darin, dass mit der Zunahme der Klebkräfte auch das Risiko steigt, den Untergrund beim Abziehen zu beschädigen, zum Beispiel durch Abheben von Lackbeschichtungen.

Besonders im Fall zügigen Abziehens in zwar ungünstigen, aber in der Praxis vorkommenden spitzen Winkeln kann es bei es bei Strappingklebebändern bereits bei geschwindigkeitsabhängigen Klebkräften von mehr als ca. 3 N/cm vorkommen, dass der Klebebandträger in z-Richtung bricht und aufspleißt, das sogenannte Shredding. Gleichzeitig stellen derartige Klebkräfte auch erhöhte Ansprüche an die Wirksamkeit des Primers beziehungsweise an die Verankerung der Klebmasse auf dem Folienträger und an die Kohäsion der Masse. Verschärft wird das Problem bei niedrigen Temperaturen von kleiner 0 °C. Auch bei diesen niedrigen Temperaturen darf das Klebeband kein Shredding zeigen.

Ein Klebeband, das als (Strapping-)Klebeband Verwendung finden soll, sollte also die folgenden Eigenschaften aufweisen:
- Das Klebeband muss lose Teile während des Transports sichern, das heißt, das Klebeband sollte eine hohe Reißfestigkeit in Maschinenrichtung und ausreichende Klebkräfte aufweisen.
- Das Klebeband darf sich unter Belastung nicht stark dehnen, das heißt, das Klebeband sollte - sofern ermittelbar -- hohe F5%-Werte [hohe Werte der Zugfestigkeit bei 5 %-Dehnung] beziehungsweise ein hohes E-Modul aufweisen.
- Das Klebeband muss unter verschiedenen klimatischen Bedingungen funktionieren, das heißt, das Klebeband sollte eine Klimabeständigkeit im Temperaturbereich zwischen -20 °C bis 40 °C und einer relativen Luftfeuchte von bis zu 95 % aufweisen.
- Das Klebeband sollte wiederabziehbar im Temperaturbereich zwischen -20 °C bis 40 °C und einer relativen Luftfeuchte von bis zu 95 % sein.
- Das Klebeband sollte wärmebeständig beim Trocknen der Klebstoffbeschichtung im Herstellprozess des Klebebandes sein.
- Das Klebeband sollte leicht zu verwenden sein, das heißt, das Klebeband sollte vorzugsweise eine geringe Abrollkraft aufweisen, was insbesondere über die Verwendung eines Carbamat- oder Silikon-Releases sichergestellt werden kann.
- Das Klebeband sollte auf verschiedenen Haftgründen gut kleben und ausreichend Kohäsion haben, um das Transportgut zu sichern, das heißt, das Klebeband kann eine Klebmasse auf Basis Naturkautschuk, SIS-Kautschuk oder Acrylat aufweisen.

Der Stand der Technik umfasst Klebebänder, die im Bereich Strapping (Bündelung), Appliance (Transportsicherung beweglicher Teile wie Schubfächer, Einlegeböden, Klappen insbesondere in Haushaltsgeräten etc.) und in der Möbelindustrie eingesetzt werden und bei Verwendung für andere Anwendungen Schwächen beim Abziehen des Klebebandes vom Untergrund im unteren Temperaturbereich (unterhalb ca. 10 °C) zeigen. Es gibt hauptsächlich zwei verschiedene Folien, die für Strapping-Klebebänder als Trägermaterialien zum Einsatz kommen:
i) Biaxial orientierte PET-Folien mit einer Dicke zwischen 30 und 60 µm
ii) Monoaxial orientierte PP-Folien mit einer Dicke zwischen 40 und 150 µm

Biaxial verstreckte PET-Träger erweisen sich bekanntermaßen gegenüber monoaxial verstreckten PP-Träger (MOPP) aufgrund der höheren Spaltfestigkeit in der Kälte als vorteilhaft, reißen aber früher in Längsrichtung (machine direction, MD) als MOPP, sind teurer und nur farblos marktüblich. Eine Einfärbung des Klebebandes auf Basis einer PET-Folie erfolgt über einen nachträglichen Bedruckungsprozess oder Einfärbung der Klebmasse. Monoaxial verstreckte PP-Folien hingegen sind preiswerter und einfach einfärbbar (gut erkennbar), was eine generelle Anforderung für Klebebänder ist, die wieder entfernt werden sollen. Beide Arten von Folien sind aufgrund des hohen E-Moduls bei Zugbelastung in der Anwendung wenig dehnbar, also damit gut geeignet. Strapping-Klebebänder aus MOPP werden in der Regel zum Umwickeln von palettierten Kartons verwendet, die Folie spaltet beim Ablösen nicht, weil das Papier an der Oberfläche leicht spaltet. Eine Verwendung von MOPP-Folie für Oberflächenschutzklebebänder ist bisher nur möglich, wenn der Klebstoff so schwach haftet, so dass weder Klebstoff oder Klebebandrest mit Folienanteil zurückbleiben. Es besteht also das Bedürfnis, ein Klebeband für Oberflächenschutzanwendungen zum Beispiel als Transportsicherung für PC-Drucker, Kühlschränke, Elektro- und Gasherde oder Möbel zur Verfügung zu stellen, welches eine hohe Haftung aufweist, aber rückstandsfrei entfernbar ist und das insbesondere auch unterhalb üblicher Raumtemperatur, also zum Beispiel zwischen -20 °C und +7°C. Bei sinkender Temperatur sinkt die Zähigkeit einer Polypropylenfolie und gleichzeitig steigt die Klebkraft der Klebmasse. Die Herausforderung besteht darin, dieses Verhalten in der Kälte zu minimieren und durch eine geeignete Kombination von Folie und Klebmasse eine Lösung der technischen Aufgabe zu finden.

Viele der bekannten Strapping-Klebebänder besitzen einen monoaxial verstreckten Polypropylen (MOPP)-Träger, da MOPP in Maschinenrichtung (MD) eine sehr hohe Kraftaufnahme besitzt. Aufgrund der Verstreckung in Maschinenrichtung (x-Richtung, MD) nimmt die Zähigkeit des MOPP-Trägers in y-Richtung (Querrichtung, CD (cross direction)) und z-Richtung (in z-Richtung wird die Dicke der Folie bestimmt) ab und damit wird die innere Festigkeit des MOPPs zur Schwachstelle. Folglich zerfasert der Träger und es bleiben die Klebmasse und Folienreste auf dem Untergrund zurück, was ein häufiger Reklamationsgrund ist.
Der Schwachpunkt von MOPP ist die geringe Festigkeit quer zur Maschinenrichtung (CD) und innerhalb der Folie in z-Richtung. Dieser Effekt verstärkt sich bei tieferen Temperaturen (-20 °C), da die Glasübergangstemperatur von Polypropylen (liegt zwischen 0 und -20 °C) erreicht beziehungsweise unterschritten wird und der Träger sehr spröde wird. Besonders ausgeprägt ist dieser Effekt bei der Verwendung eines PP-Homopolymers, da durch die regelmäßige Anordnung der Polymerketten eine hohe Kristallinität entsteht, die die Folie sehr fest, steif und spröde macht. Besonders für Anwendungen bei tiefen Temperaturen gibt es heterophasische PP-Copolymere, bei denen in der PP-Homopolymer-Matrix ein Ethylen-Propylen-Copolymer (EP-Phase) feinverteilt eingemischt beziehungsweise polymerisiert wird. Durch die vorliegende EP-Phase wird die Zähigkeit des PP-Copolymers erhöht.
Heterophasische Polypropylene beziehungsweise Polypropylene mit verschiedenen Phasen, insbesondere Propylencopolymere mit verschiedenen Phasen, das heißt Polymere, die eine Propylenpolymermatrix und ein Elastomer enthalten, sind bekannt.

Bekannt ist, einen weicheren Träger einzusetzen. Diesem ist standardmäßig Polyethylen beigemischt, um die Glasübergangstemperatur abzusenken und eine höhere Flexibilität des Trägers bei tieferen Temperaturen beizubehalten. Dadurch wird die Neigung zum Zerfasern bei tieferen Temperaturen verbessert, kann aber nicht komplett beseitigt werden. Ein nachteiliger Effekt ist hier aber eine Reduzierung der Festigkeit einer entsprechenden Folie. Um eine robuste und shredding-freie Lösung anbieten zu können, wird eine Klebmasse mit niedrigeren Klebkräften bei tiefen Temperaturen auf dem Klebeband eingesetzt. Da der Markt jedoch eher höhere Klebkräfte bei tiefen Temperaturen fordert, um eine Transportsicherung gewährleisten zu können, muss ein anderer Träger gewählt werden.

Ein Transportsicherungsklebeband mit einer Folie basierend auf Polypropylenhomo-, Polypropylen-Impact- oder Polypropylen-Randomcopolymeren in Kombination mit einem Ethylen-Copolymer und/oder einem Ethylen-Propylen-Elastomer wird in der WO 2015/118138 A1 offenbart. In der US2006/0258811 A1 wird ein Transportsicherungsklebeband mit einer polypropylenbasierten Folie umfassend hochkristallines Polypropylen sowie Polypropylen-Impact-Copolymer umfassend Ethylen-Propylen-Elastomer offenbart.

Ein häufig auftretendes Problem bei MOPP-Folien ist, neben dem Shredding beim Entfernen des Klebebands, das Auftreten von Fasern beim Scheid- und Konfektionierprozess. Die gebildeten Fasern haben starken Einfluss auf Prozesssicherheit, Produktionsgeschwindigkeit und Produktqualität. Durch faserfreie Folien kann die Produktionsgeschwindigkeit um mindestens 100 %, wenn nicht sogar 400 % und mehr gesteigert werden. Des Weiteren wird der Prozess effizienter, da aufwendige Reinigungen entfallen. Wird in der Produktion ein optisches Fehlererkennungssystem eingesetzt, führt das Auftreten von Fasern und Faseragglomeraten oftmals zu Auslösung der Fehlererkennung und somit zu Stillständen im Produktionsprozess.

Aufgabe der Erfindung ist es, gegenüber dem Stand der Technik eine merkliche Verbesserung zu erzielen und ein Klebeband zur Verfügung zu stellen, welches ein reduziertes Spalten beim Abziehen des Klebbandes in der Kälte bei einem Temperaturbereich zwischen -20 °C und bis +7 °C aufweist, insbesondere soll die Kältespaltfestigkeit in Quer- und z-Richtung bei ruckartiger Belastung des Trägers verbessert werden.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren ist die Verwendung des erfindungsgemäßen Klebebands umfasst.

Demgemäß betrifft die Erfindung ein Klebeband mit einem Träger mit einer Folie, auf die zumindest einseitig eine Klebemasse aufgebracht ist, wobei die Folie eine monoaxial (in Maschinenrichtung) gereckte Folie ist, die zu mindestens 95 Gew.-%, vorzugsweise zu 99 Gew.-%, weiter vorzugsweise zu 100 Gew.-% aus einer Propylenpolymerzusammensetzung mit verschiedenen Phasen besteht, die die folgenden Komponenten umfasst:
i) 93 bis 96 Gew.-% auf das Gesamtgewicht der Komponenten i) und ii) bezogen, einer Propylenpolymermatrix, die ein Propylenhomopolymer und weiter vorzugsweise ein bevorzugt statistisches Propylencopolymer umfasst, das ein Comonomer aufweist, das aus Ethylen und C₄- bis C₁₀-α-Olefinen ausgewählt ist, wobei die Propylenpolymermatrix einen Comonomergehalt von nicht mehr als 15 Gew.-% aufweist;
ii) 4 bis 7 Gew.-% auf das Gesamtgewicht der Komponenten i) und ii) bezogen, eines Elastomers in Form eines Ethylen-Propylen-Copolymers mit einem Ethylengehalt von 50 bis 90 Gew.-%.

Die an 100 Gew.-% fehlenden Anteile in der Folie können aus den später erwähnten, der Propylenpolymerzusammensetzung zuzusetzenden Komponenten bestehen.

Weiter vorzugsweise besteht die Propylenpolymerzusammensetzung nur aus den Komponenten i) und ii). Weitere Polymere sind dann nicht in der Matrix enthalten.

Die Propylenpolymermatrix (Komponente i) kann ein reines Propylenhomopolymer oder bevorzugt eine Mischung aus Propylenhomopolymer und aus einem bevorzugt statistischen Propylencopolymer enthalten, vorzugsweise aus dem Propylenhomopolymer oder aus dieser Mischung bestehen. Die Mischung aus Propylenhomopolymer und aus einem bevorzugt statistischen Propylencopolymer ist als heterophasisches Propylencopolymer (auch als Impact-Polypropylen) bekannt.

Gemäß einer besonders vorteilhaften Ausführungsform verteilen sich die Anteile an Propylenhomopolymer und an Propylencopolymer in der Propylenpolymermatrix wie folgt:
70 bis 99 Gew.-% Propylenhomopolymer und
1 bis 30 Gew.-% Propylencopolymer

Die Propylenpolymermatrix weist gemäß einer bevorzugten Variante einen Schmelzflußindex MFI von 0,5 bis 5 g/10 min (gemessen gemäß ISO 1133 bei 230 °C und unter einem Gewicht von 2,16 kg), vorzugsweise 1 bis 5 g/10 min, ein Molgewicht M_{w} von 500.000 bis 1.000.000 g/mol sowie einen Biege-E-Modul von 1000 bis 1300 MPa auf.

Das Matrixpolymer enthält vorzugsweise mindestens zwei Polypropylene. Wenn das Matrixpolymer mehr verschiedene Propylenpolymere umfasst, können diese Polymere unterschiedliche Molekulargewichtsverteilungen aufweisen. Diese Komponenten können eine identische oder eine unterschiedliche Taktizität aufweisen.

Das Matrixpolymer kann in einer Polymerisationsstufe erzeugt werden, die in einem oder mehreren Polymerisationsreaktoren durchgeführt wird oder indem zwei oder mehr kompatible Polymere mit der gewünschten Molekulargewichtsverteilung oder Monomerzusammensetzung gemischt werden. Wünschenswerterweise kann ein Matrixpolymer, das zwei oder mehr verschiedene Propylenpolymere umfasst, durch die Verwendung von zwei oder mehr Katalysatortypen in einer Polymerisation in einem Reaktor oder alternativ durch die Durchführung der Polymerisation in zwei oder mehr verschiedenen Polymerisationsreaktoren (zum Beispiel Masse-, Suspensions- und/oder Gasphasenreaktoren, als Massereaktoren sind Reaktoren mit geschlossenem Kreis bevorzugt) hergestellt werden, wodurch in den verschiedenen Polymerisationsreaktoren Matrixpolymere mit der gewünschten unterschiedlichen Molekulargewichtsverteilung oder Monomerzusammensetzung erzeugt werden. Die letztere Methode ist bevorzugt.

Die Matrix besteht vorzugsweise aus einem Propylenhomopolymer und einem bevorzugt statistischen Propylencopolymer. Die Comonomere werden aus Ethylen und C₄- bis C₁₀-α-Olefinen ausgewählt. Besonders bevorzugt wird als Comonomer Ethylen gewählt. Der Comonomergehalt (bezogen auf die Propylenpolymermatrix (Komponente i)), vorzugsweise Ethylengehalt, liegt bei bis zu 15 Gew.-%, vorzugsweise 3 bis 8 Gew.-%,. Ganz besonders bevorzugt besteht die Propylenpolymermatrix (Komponente i)) aus einem heterophasischen Propylencopolymer (auch als Impact Polypropylen bekannt).

Erfindungsgemäß wird der Begriff Homopolymer benutzt, um ein Polymer zu kennzeichnen, bei dem mindestens 99 Gew.-% von einem einzigen Monomer stammen und die Polymerkette eine hohe Isotaktizität von mindestens 95 % aufweist.

Die Herstellung von Polymeren mit den gewünschten Eigenschaften für die Komponenten des Matrixpolymers kann erreicht werden, indem dem Fachmann allgemein bekannte Verfahren angewendet werden, zum Beispiel durch geeignete Auswahl der Katalysatorsysteme (zum Beispiel Ziegler-Natta-Katalysatoren oder Metallocen- oder andere Katalysatoren mit einheitlichen aktiven Zentren), der Comonomere, der Art des Polymerisationsreaktorsund der Bedingungen des Polymerisationsverfahrens. Besonders bevorzugt wird das Matrixpolymer in einem Polymerisationsverfahren hergestellt, das ein getragenes Ziegler-Natta-Katalysatorsystem verwendet (insbesondere ein Ziegler-Natta-System für eine hohe Ausbeute, das Ti, Cl, Mg und Al enthält). Es können auch Metallocenkatalysatoren verwendet werden.

Die zweite Komponente (Komponente ii)) der erfindungsgemäßen Polymerzusammensetzung mit verschiedenen Phasen ist das Elastomer in Form eines Ethylen-Propylen-Copolymers mit einem Ethylengehalt von 50 bis 90 Gew.-%.

Ethylen-Propylen-Elastomere auch als Ethylen-Propylen-Kautschuk, EPM oder EPR bekannt, gibt es heute in einer weiten Variationsbreite. Typischerweise haben die Ethylen-Propylen-Elastomere einen Ethylengehalt von 45 bis 80 Gew.-%, sind einem weiten Viskositäts- beziehungsweise Molekulargewichtsbereich verfügbar und können als weiteres Monomer ein Dien-Monomer enthalten (als EPDM nachträglich vulkanisierbar). Die Ethylen-Propylen-Kautschuke können amorph und teil-kristallin sein. Das ist abhängig von dem Ethylen-Propylen-Anteilen im Polymer. Im Bereich von 45 bis 55 Gew.-% Ethylen liegt ein amorphes, nichtkristallines Polymer vor. Ab einen Anteil von größer als 65 Gew.-% an Ethylen kommt es zur Ausbildung von ausgeprägten Ethylen-Kristalliten. Die Herstellung der Ethylen-Propylen-Kautschuke erfolgt typischerweise im Lösemittel-, Suspensions- (auch Slurry Prozess genannt) und Gasphasenprozess unter Verwendung von Ziegler-Natta-Katalysatoren oder seltener unter Verwendung von MetallocenKatalysatoren.

Gemäß einer bevorzugten Ausführungsform der Erfindung beträgt der Ethylengehalt der Komponente ii) 55 bis 80 Gew.-% und besonders bevorzugt 65 bis 75 Gew.-%.

Weiter vorzugsweise
- beträgt der Wert für das E-Modul 25 bis 150 MPa,
- liegt der Erweichungspunkt bei kleiner 70 °C (gemessen nach DSC),
- liegt der Schmelzflußindex MFI bei kleiner 10 g/10 min, bevorzugt kleiner 5 g/10 min (gemessen gemäß ISO 1133 bei 190 °C und unter einem Gewicht von 2,16 kg) und/oder
- beträgt der Kristallinitätsgrad α gleich 0,1

Wie beim Matrixpolymer kann das Elastomer nach herkömmlichen Verfahren zum Polymerisieren in der Gasphase hergestellt werden. Es wird jedoch vorzugsweise unter Verwendung eines getragenen Katalysatorsystems, zum Beispiel eines Ziegler-Natta-Katalysatorsystems oder eines Katalysatorsystems aus Metallocen-Alumoxan hergestellt.

Das Elastomer (Komponente ii)) kann mit dem Matrixpolymer (Komponente i)) vermischt werden. Dieses Mischen beziehungsweise Blenden der beiden Komponenten kann vorteilhaft direkt in dem Aufschmelzextruder zur Herstellung der Polymerfolie erfolgen. Hierzu wird üblicherweise ein Einschnecken-Extruder verwendet werden. Die Mischung der Komponenten kann aber auch in einem separaten Schritt zum Beispiel mit Hilfe eines Doppelschnecken-Extruders erfolgen.

Nach einer bevorzugten Ausführungsform wird die erfindungsgemäße Zusammensetzung nach einem Verfahren hergestellt, das die folgenden Schritte umfasst:
a) Polymerisieren von Propylen in einem ersten Reaktor, wodurch ein erstes Homopolymer erzeugt wird;
b) weiteres Polymerisieren von Propylen und einem Comonomer, das aus insbesondere Ethylen und C₄- bis C₁₀-α-Olefinen ausgewählt ist, in einem weiteren Reaktor in Gegenwart des ersten Polymers, wodurch ein Gemisch aus dem ersten Polymer und einem zweiten Polymer erzeugt wird;
c) Mischen oder Blenden oder eine Kombination aus Mischen oder Blenden von Komponente i) aus a) + b) mit einem Elastomer (Komponente ii)) in Form eines Ethylen-Propylen-Copolymers mit einem Ethylengehalt von 50 bis 90 Gew.-%, bevorzugt 55 bis 80 Gew.-% und besonders bevorzugt 65 bis 75 Gew.-%.

In den Schritten a) und b) dieses Verfahrens, in denen die Propylenpolymermatrix erzeugt wird, werden die Polymerisationen vorzugsweise in Massereaktoren (zum Beispiel Reaktoren mit geschlossenem Kreis), Suspensionsreaktor dem so genannten Slurry-Verfahren oder Gasphasenreaktoren durchgeführt.

Eine Übersicht zu geeigneten Herstellungsverfahren findet sich in Ullmann's "Encyclodedia of Industrial Chemistry", Stichwort "Polypropylene" von M. Gahleitner und C. Paulik, Wiley-VCH Verlag GmbH & CO KGaA, Weinheim 2014 (Nummer 10.1002/14356007.o21_o04.pub2).

Neben dem Matrixpolymer Komponente i) und dem Elastomer Komponente ii) kann die erfindungsgemäße Polymerzusammensetzung andere Komponenten enthalten, zum Beispiel herkömmliche Zusätze wie Farbstoffe, Kristallisations-Keimbildner, Füllstoffe, Antioxidantien, Strahlungsstabilisatoren, Prozesshilfsmittel usw. Die Verwendung von anorganischen, organischen oder polymeren Keimbildnern ist besonders bevorzugt. Vorzugsweise werden die genannten Zusätze in einem zusätzlichen Polymer als Masterbatch verwendet.

Die erfindungsgemäße Polymerzusammensetzung kann für die Verwendung vorbereitet werden, indem die Komponenten vorzugsweise in einem Extruder vermischt werden. Das Mischen beziehungsweise Blenden der Komponenten i) und ii) sowie der zusätzlichen Komponenten kann vorteilhaft direkt in dem Aufschmelzextruder zur Herstellung der Polymerfolie erfolgen. Hierzu wird üblicherweise ein Einschnecken-Extruder verwendet werden. Die Mischung der Komponenten kann aber auch in einem separaten Schritt zum Beispiel mit Hilfe eines Doppelschnecken-Extruders erfolgen.

Die Folie des erfindungsgemäßen Klebebandes wird durch Extrusion und Verstrecken in Längsrichtung unter Verwendung üblicher, allgemein bekannter Verfahren erhalten.

Das Reckverhältnis bei der Reckung der extrudierten Primärfolie in Längsrichtung (Maschinenrichtung) beträgt vorzugsweise 1:5 bis 1:9, besonders bevorzugt 1:6 bis 1:8. Ein Reckverhältnis 1:6 gibt an, dass aus einem Abschnitt der Folie von zum Beispiel 1 m Länge ein Abschnitt von 6 m Länge der gereckten Folie entsteht. Das Recken erfolgt, ohne dass die Breite der Primärfolie wesentlich abnimmt, hauptsächlich zu Lasten der Dicke der Folie.

Die übliche Foliendicke nach dem Recken liegt dabei zwischen 40 und 150 µm. Bevorzugt sind 50 bis 100 µm.

Die monoaxial gereckte erfindungsgemäße Folie aus den Komponenten i) und ii) zeichnet sich durch einen Kristallisationsgrad α von 0,4 bis 0,5 aus.

In der Regel erfolgt zumindest eine Corona- oder auch Flammvorbehandlung der später mit der Klebmasse zu beschichtenden Seite des Folienträgers, um die Klebmasse besser auf dem Träger zu verankern. Eine weitere Verbesserung der Haftung gleichbedeutend mit der Verankerung der Klebmasse auf dem Träger kann durch den Einsatz von Primern erfolgen. Mit diesen kann zum einen die Oberflächenenergie zielführend eingestellt werden und zum anderen zum Beispiel bei Verwendung von Isocyanat haltigen Primern eine chemische Anbindung der elastomeren Klebmassenkomponente an den Träger verfolgt werden.

Das übliche Flächenauftragsgewicht des Primers liegt dabei zwischen 0,1 und 10 g/m². Eine weitere Möglichkeit, die Verankerung zu verbessern, besteht in der Verwendung von Trägerfolien, die durch Coextrusion beim Folienhersteller gezielt mit einer für die Anbindung zum Haftklebstoff günstigen Polymeroberfläche ausgestattet sind.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).

Vorzugsweise ist die auf dem Trägermaterial aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Um aus dem Träger ein Klebeband herzustellen, kann auf alle bekannten Klebemassensysteme zurückgegriffen werden. Neben den bevorzugten auf Natur- oder Synthesekautschuk basierten Klebemassen sind Silikonklebemassen sowie Polyacrylatklebemassen, vorzugsweise eine niedermolekulare Acrylatschmelzhaftklebemasse, verwendbar.

Bevorzugt wird eine Klebemasse verwendet, die aus der Gruppe der Naturkautschuke oder aus einem beliebigen Blend aus Naturkautschuken und/oder Synthesekautschuken besteht, wobei der Anteil des Synthesekautschuk in dem Blend gemäß einer bevorzugten Variante höchstens so groß wie der Anteil des Naturkautschuks ist.

Kautschukklebemassen zeigen eine gute Kombination aus Klebkraft, Tack und Kohäsion sowie ausgewogenes Klebverhalten auf nahezu allen relevanten Haftuntergründen und sind somit prädestiniert. Allgemeine Informationen zu Kautschukklebemassen sind unter anderem Standardwerken für Klebebänder wie beispielsweise dem "Handbook of Pressure Sensitive Adhesive Technology" von Donatas Satas zu entnehmen.

Der Naturkautschuk oder die Naturkautschuke können grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.
Daneben hat sich ein 100%-System auf Styrol-Isopren-Styrol (SIS) als geeignet erwiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Verwendbar sind Klebemassen auf Lösemittelbasis, auf wässriger Basis oder auch als Hotmeltsystem. Auch eine Masse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich ebenfalls als geeignet zeigt, ist eine niedermolekulare Acrylatschmelzhaftklebemasse, wie sie unter der Bezeichnung acResin UV oder Acronal®, insbesondere Acronal® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Schließlich sei erwähnt, dass auch auf Polyurethan oder Polyolefin basierende Kleber geeignet sind.

Zur Optimierung der Eigenschaften kann die zum Einsatz kommende Selbstklebemasse mit Klebrigmachern (Harzen) und/oder einem oder mehreren Zuschlagstoffen wie Weichmachern, Füllstoffen, Pigmenten, UV-Absorbern, Lichtschutz-, Alterungsschutz-, Vernetzungsmitteln, Vernetzungspromotoren oder Elastomeren abgemischt sein.
Unter der Bezeichnung "Klebharz", englisch "Tackifier Resins", versteht der Fachmann einen Stoff auf Harzbasis, der die Klebrigkeit erhöht.

Klebrigmacher sind beispielsweise insbesondere hydrierte und nicht hydrierte Kohlenwasserstoffharze (zum Beispiel aus ungesättigten C₅- oder C₇-Monomeren), Terpenphenolharze, Terpenharze aus Rohstoffen wie α- oder β-Pinen und/oder δ-Limone, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.
Auf die Darstellung des Wissensstandes im "Handbook of Pressure Sensitive Adhesive Technology" von Donatas Satas (van Nostrand, 1989) sei ausdrücklich hingewiesen.

Der Klebemasse können zur Stabilisierung übliche Zuschlagstoffe wie Alterungsschutzmittel (Antiozonantien, Antioxidantien, Lichtschutzmittel usw.) zugesetzt sein.
Als Additive zur Klebemasse werden typischerweise genutzt:
- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thiosynergisten (Thioether)
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Netzadditive
- Haftvermittler
- Endblockverstärkerharze und/oder
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine
- Füllstoffe wie Fasern, Ruß, Zinkoxid, Titandioxid, Mikrovollkugeln, Voll- oder Hohlglaskugeln, Kieselsäure, Silikaten, Kreide

Geeignete Füllstoffe und Pigmente sind beispielsweise Fasern, Ruß, Zinkoxid, Titandioxid, Mikrovollkugeln, Voll- oder Hohlglaskugeln, Kieselsäure, Silikate, Kreide Ruß, Titandioxid, Calciumcarbonat und/oder Zinkcarbonat.

Geeignete Alterungsschutzmittel (Antiozonantien, Antioxidantien, Lichtschutzmittel usw.) für die Klebemassen sind primäre Antioxidantien wie zum Beispiel sterisch gehinderte Phenole, sekundäre Antioxidantien wie zum Beispiel Phosphite oder Thiosynergisten (Thioether) und/oder Lichtschutzmittel wie zum Beispiel UV-Absorber oder sterisch gehinderte Amine.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Die aufgezählten Stoffe sind wiederum nicht zwingend, die Klebemasse funktioniert auch, ohne dass diese einzeln oder in beliebiger Kombination zugesetzt sind, also ohne Harze und/oder restliche Zuschlagstoffe.

Die Beschichtungsstärke mit Klebemasse liegt vorzugsweise im Bereich von 1 bis 100 g/m², insbesondere 10 bis 50 g/m², weiter vorzugsweise im Bereich von 15 bis 35 g/m².

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung oder Dispersion.

Die so hergestellten Haftklebmassen können dann mit den allgemein bekannten Verfahren auf den Träger gebracht werden. Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.

Die Klebmasse in Verbindung mit der genannten Folie ermöglicht im Bereich der üblichen Anwendungstemperatur, die zwischen -20 °C und +40 °C liegt, ein rückstandsfreies Abziehen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden.
Als Trennmaterial eignet sich bevorzugt ein nicht-fusselndes Material wie eine Kunststofffolie oder ein gut verleimtes, langfaseriges Papier.
Die Klebebänder weisen insbesondere Lauflängen von 1.000 bis 30.000 m auf.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv (antiadhäsiv) wirkende Stoffe ausgerüstet sein.
Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C₁₄- bis C₂₈-Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew. %, besonders bevorzugt 13 bis 18 Gew.-% des trennwirksamen Bestandteils.

Erfindungsgemäße Klebebänder werden vorzugsweise in den Breiten 9 bis 50 mm, insbesondere 19 bis 25 mm verwendet und besitzen dabei eine bevorzugte Dicke von 40 bis 200 µm, vorzugsweise 70 bis 180 µm, weiter vorzugsweise 75 bis 120 µm.
Als Breite der Rollen werden üblicherweise 10, 15, 19, 25 und 30 mm gewählt.

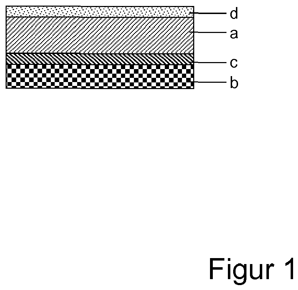

In der Figur 1 ist ein typischer Aufbau des erfindungsgemäßen Klebebands gezeigt.
Das Produkt besteht aus einer Folie (a) und einer Klebmasse (b). Zusätzlich können auch ein Primer (c) zur Verbesserung der Haftung zwischen Klebmasse und Träger sowie ein Rückseitenrelease (d) eingesetzt werden.

Der Träger (a) besteht aus einer monoaxial orientierten Polypropylenfolie mit einer bevorzugten Dicke zwischen 40 und 150 µm.
Die Klebmasse (b) ist eine Mischung aus Naturkautschuk oder anderen Elastomeren sowie verschiedenen Harzen und kann gegebenenfalls auch Weichmacher, Füllstoffe und Alterungsschutzmittel enthalten.

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Haftklebmassen können dann mit den allgemein bekannten Verfahren auf den Träger gebracht werden. Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.

Heterophasisches PP-Copolymer ist für Anwendungen bei niedrigeren Temperaturen vorgesehen, da das Material durch die eingebaute EP-Phase auch bei tiefen Temperaturen ein gewisses Maß an Flexibilität beibehält und eine höhere Zähigkeit als PP-Homopolymere oder auch PP-Random-Copolymere aufweist. Eine Schwachstelle der heterophasischen PP-Copolymere ist die recht schlechte Anbindung der EP-Phase an die PP-Homopolymer-Phase, da diese beiden Phasen nicht mischbar sind und somit nebeneinander vorliegen. Beim Abziehen des Klebebandes ist die schwächste Stelle somit in der Anbindung zwischen den beiden Polymer-Phasen (EP- und PP-Homo), so dass es zum Zerfasern (Shredding) innerhalb der Folie kommt. Durch die Zugabe des EPMs mit niedrigem Young'schen Elastizitätsmodul (E-Modul, Ermittlung über Zugversuch) und hohem Ethylen-Anteil, das bereits in der EP-Phase vorliegt, wird der Ethylen-Gehalt im Material erhöht. Somit wird die Glasübergangstemperatur zu tieferen Temperaturen verschoben und das Material besitzt bei tieferen Temperaturen eine höhere Zähigkeit. Des Weiteren wird die Kristallinität in der PP-Homo-Matrix gestört, so dass ein höherer Anteil an amorphen Bereichen vorliegt, die eine höhere Flexibilität mit sich bringt. Der Effekt des Elastomers ist die Verringerung des kristallinen Anteils in der Folie und "Verklebung" der Fibrillen, die bei der Verstreckung der amorphen Phase in Maschinenrichtung entstehen (Verringerung der Nachkristallisation der amorphen Phase).

Überraschenderweise wird bei der erfindungsgemäßen Folie die Festigkeit in z-Richtung und Faserbildung vor allem bei Kälte erheblich verbessert beziehungsweise das Shredding reduziert, ohne dabei das E-Modul beziehungsweise Kraft bei 5 %-Dehnung, die wichtigste Eigenschaft für MOPP-Folien, zu reduzieren.

Das erfindungsgemäße Klebeband zeigt eine gute Wiederablösbarkeit von den verschiedensten Untergründen bei Temperaturen von bis zu - 20 °C. Auf der anderen Seite ist aber auch bei Plustemperaturen (+40 °C) die Wiederablösbarkeit gegeben, das heißt, es sind keine Rückstände durch Kohäsionsversagen der Klebmasse, Masseumspulen (schlechte Masseverankerung) oder ein Trägerspalte zu beobachten. Der Träger weist eine ausreichende innere Festigkeit in alle drei Raumrichtungen und hohe Schlagzähigkeit auch in der Kälte auf.

Aufgrund der geschilderten Eigenschaften lässt sich das Klebeband hervorragend als Strapping-Klebeband zum Bündeln und Palettieren von Kartonagen und anderen Gütern einsetzen, und dies auch bei tiefen Temperaturen.
Des Weiteren lassen sich mit dem Klebeband bewegliche Teile wie Türen, Klappen usw. an Druckern oder Kühlschränken während des Transport vom Hersteller zum Verkäufer beziehungsweise weiter zum Käufer hervorragend fixieren, und dies auch bei tiefen Temperaturen.

Das erfindungsgemäße Klebeband ist aufgrund der geschilderten Eigenschaften auch in folgenden Anwendungen vorteilhaft einsetzbar:
a) Bei der temporären Fixierung von größeren Bauteilen wie zum Beispiel Windschutzscheiben von Autos nach dem Einsetzen in den Rahmen bis zur Aushärtung des PU-Flüssigklebers, um ein Verrutschen während des Aushärteprozesses zu verhindern.
b) Beim Endtabbing (Endlagenverklebung) von Metall-Coils mit dem Anspruch der rückstandsfreien Wiederablösbarkeit auch bei niedrigen Temperaturen.
c) Beim temporären Verschließen von Behältern oder generelles Bekleben von Oberflächen mit der Anforderung auf rückstandsfreie Wiederablösbarkeit auch bei niedrigen Temperaturen.

Es ist ein deutlich verringertes Spalten des Trägers in der Kälte zu beobachten, des Weiteren sind die Klebebänder rückstandsfrei wiederablösbar.

Die hier beschriebene Erfindung löst, durch die erhöhte innere Festigkeit, ebenfalls die Faserbildung im Scheid- und Konfektionierprozess.

Im Folgenden wird die Erfindung durch einige Beispiele näher erläutert, ohne die Erfindung damit einschränken zu wollen.

### Beispiel

Alle Mengenangaben, Anteile und Prozentanteile sind auf das Gewicht bezogen "GT" bedeutet Gewichtsteile.

### Versuchsdurchführung

Es wird ein Dry-Blend des heterophasischen Copolymers mit dem EPM (bevorzugte Konzentration 4 bis 7 Gew.-%) hergestellt und mit Hilfe eines Einschneckenextruders (bei Temperaturen zwischen von 160 bis 240 °C) aufgeschmolzen. Die Schmelze wird durch eine Breitschlitzdüse zu einer Folie ausgeformt und auf einer Kühlwalze (bei Temperaturen zwischen 60 bis 100 °C) abgelegt und abgekühlt. Mit Hilfe einer monoaxialen Reckeinheit wird die Folie im Kurzreckspaltverfahren mit Reckraten von 1:5 bis 1:9 (bevorzugt 1:6 bis 1:8) verstreckt.

Der Dry-Blend besteht aus 5 Gew.-% des Elastomers EPM Vistalon 722 von ExxonMobil, ein Ethylen-Propylen-Copolymer mit einem Ethylengehalt von 72 Gew.-% sowie mit einem MFI (gemessen bei 190 °C und 2,16 kg Belastung) von 1,0 g/10 min und einem Elastizitätsmodul von 1240 MPa, und aus 95 Gew.-% des heterophasischen PP-Copolymers Profax SV 258 von LyondellBasell, mit einem MFI (gemessen bei 230 °C und 2,16 kg Belastung) von 1,2 g/10 min und einem Elastizitätsmodul von 1240 MPa. Das Material wird in einem Einschneckenextruder bei Temperaturen von 180 bis 230 °C aufgeschmolzen, mithilfe einer Breitschlitzdüse zu einer Flachfolie ausgeformt und auf eine Chill-Roll mit einer Temperatur von 95 °C abgelegt und abgekühlt. Die entstanden Folie besitzt eine Dicke von 325 µm. Nach dem Abkühlen wird die Folie erneut in einer monoaxialen Reckeinheit auf Temperaturen von 127 °C aufgeheizt und in im Kurzspalt mit einer Reckrate von 1:6,5 verstreckt und anschließend bei eine Temperatur von 127 °C getempert und schließlich aufgewickelt. Somit wird eine Enddicke der Folie von 50 µm erzeugt.

### Ergebnisse

Bei der Transportsicherung sind die mechanischen Eigenschaften der Folie von zentraler Bedeutung. Eine sehr weiche Folie wird wahrscheinlich kein Shredding aufweisen, dafür aber eine sehr hohe Dehnung bei geringer Kraftaufnehme haben. Dies würde dazu führen, dass die Folie sich dehnen würde, wenn beim Transport Kräfte auftreten. Somit würde das Klebeband "ausleiern" anstatt das Transportgut zusammen zu halten.

**Tabelle 1: Mechanische Eigenschaften und Shredding-Ergebnisse verschiedener MOPP- Folien**

| Material | F5% [N/mm²] | Fmax [N/mm²] | Shredding |
|---|---|---|---|
| MOPP-Folie | 76 | 273 | Nicht bestanden |
| Profax SV 258 | 112 | 328 | Nicht bestanden |
| Profax SV 258 + 2,5 Gew.-% Vistalon 722 | 110 | 328 | Nicht bestanden |
| Profax SV 258 + 5 Gew.-% Vistalon 722 | 108 | 317 | Bestanden |
| Profax SV 258 + 10 Gew.-% Vistalon 722 | 103 | 315 | Bestanden |

Wie in Tabelle 1 zu sehen, senkt die Zugabe von Vistalon 722 die mechanischen Eigenschaften im Vergleich zum reinen heterophasischen Copolymer nur geringfügig. Bei einer Konzentration von 5 Gew.-% besteht die Folie jedoch den Shredding-Test. Eine Konzentration von 10 Gew.-% Vistalon hat gegenüber 5 Gew.-% Vistalon keinen Vorteil mehr, so dass eine Konzentration um 5 Gew.-% bevorzugt wird. Die zum Vergleich untersuchte MOPP-Folie in dem Klebeband tesa® 64294, ausgerüstet mit einer Naturkautschukmasse, hat eine deutlich geringere Kraftaufnahme. Zudem besteht die Folie den Shredding-Test nicht.

### Prüfmethoden

Die Messungen werden (sofern nichts anderes angegeben ist) bei einem Prüfklima von 23 ± 1 °C und 50 ± 5 % rel. Luftfeuchte durchgeführt.

### Shredding

Die Folien werden nach 2 wöchiger Reifezeit mit einer Corona-Dosis von 60,7 W*min/m², bei einer Geschwindigkeit von 30 m/min vorbehandelt, um die Oberflächenenergie und somit die Verankerung zu einem d/s Klebeband zu erhöhen. Die Folie wird einem geeigneten Klebeband, zum Beispiel tesa® 61795 PV40 oder tesa® 4965 PV0, kaschiert und in 20 mm breite Streifen geschnitten. tesafix® 4965 ist ein doppelseitig klebendes, transparentes Polyesterklebeband mit einer Acrylatklebmasse.

tesa® 4965 weist die folgenden Eigenschaften auf:
- Trägermaterial PET-Film
- Dicke 205,00 µm
- Klebmasse modifiziertes Acrylat
- Reißdehnung 50,00 %
- Reißkraft 20,00 N
- Klebkraft auf Stahl (initial) 11,50 N/cm
- Klebkraft auf ABS (initial) 10,30 N/cm
- Klebkraft auf Aluminium (initial) 9,20 N/cm
- Klebkraft auf PC (initial) 12,60 N/cm
- Klebkraft auf PE (initial) 5,80 N/cm
- Klebkraft auf PET (initial) 9,20 N/cm
- Klebkraft auf PP (initial) 6,80 N/cm
- Klebkraft auf PS (initial) 10,60 N/cm
- Klebkraft auf PVC (initial) 8,70 N/cm

Diese Verbunde werden anschließend auf eine mit Ethanol gereinigte ABS-Testplatte verklebt und für 24 Stunden bei Raumtemperatur gelagert. Anschließend wird die Folie vom doppelseitigen Klebeband mit drei verschiedenen Geschwindigkeiten beziehungsweise Winkeln per Hand entfernt: bei 90° langsam, bei 180° langsam und anschließend bei 180° schnell. Dieser Test wird ebenfalls nach 24 stündiger Lagerung bei -20 °C durchgeführt. Der Test gilt als bestanden, wenn nach dem Abziehen der Folie keine Folienreste auf der Klebmasse zurückbleiben

### Zugversuch und E-Modul

Nach DIN ISO 527: An einer Zugprüfmaschine wird ein 15 mm breiter Folienstreifen in einem Klemmbackenabstand von 100 mm eingespannt. Der Zugversuch wird mit einer Geschwindigkeit von 300 mm/min bis zum Abriss durchgeführt. Aus der Messkurve wird die Höchstzugkraft Fmax und die Kraft bei einer Dehnung von 5 % (F5%) ermittelt. Die Werte werden in N/mm² angegeben, das heißt, dass der Messwert auf die Foliendicke normiert wird. Der E-Modul wird aus der Kraft-Dehnungs-Kurve bei niedriger Dehnung ermittelt gemäß DIN ISO 527.

### Kristallisationsgrad

Der Kristallisationsgrad wird nach dem Verfahren ermittelt, wie es in dem Artikel von Schubnell, M.: "Bestimmung der Kristallinität bei Polymeren aus DSC-Messungen"; Mettler Toledo Deutschland; de.mt.com; USERCOM vol. 1, 2001, Seiten 12 bis 13, beschrieben ist.
Der Kristallisationsgrad wird dabei mittels einer DSC-Messung bei einer Aufheizrate von 10 K/min explizit aus der freien Enthalpie der 1. Aufheizkurve ermittelt, wobei für die Schmelzenthalpie eines 100% kristallinen Homo-PPs ein Wert von 207 J/g angenommen wird (Literaturwert).

### Klebkraft

Die Bestimmung der Klebkraft (gemäß AFERA 5001) wird wie folgt durchgeführt. Als definierter Haftgrund wird galvanisch verzinktes Stahlblech mit einer Stärke von 2 mm (Bezug von der Firma Rocholl GmbH) eingesetzt. Das zu untersuchende verklebbare Flächenelement wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

### Schmelzindex (MFI)

Der Schmelzindex (MFI) wird gemäß ISO 1133 gemessen. Für Polyethylene wird dieser bei 190 °C und einem Gewicht von 2,16 kg ermittelt, für Polypropylene bei einer Temperatur von 230 °C und einem Gewicht von 2,16 kg.

### Biegemodul (Biege-E-Modul, Flexural Modulus)

Die Prüfung erfolgt nach ASTM D 790 A (2 % Secant), also nach "Procedure A" (siehe u.a. Punkt 1 der ASTM) mit einem Prüfkörper zur Bestimmung des Biegemoduls mit den Abmessungen 0.125" x 0.5" x 5.0" (3,2 mm x 12,7 mm x 125 mm).

### Kristallitschmelzpunkt

Der Kristallitschmelzpunkt von Copolymeren, Hart- und Weichblöcken und ungehärteten Reaktivharzen wird kalorimetrisch über die Differential Scanning Calorimetry (DSC) nach DIN 53765:1994-03 bestimmt. Aufheizkurven laufen mit einer Heizrate von 10 K/min. Die Muster werden in AI-Tiegeln mit gelochtem Deckel und Stickstoffatmosphäre vermessen. Es wird die zweite Aufheizkurve ausgewertet. Bei amorphen Stoffen treten Glasübergangstemperaturen auf, bei (semi)kristallinen Stoffen Schmelztemperaturen. Ein Glasübergang ist als Stufe im Thermogramm erkennbar. Die Glasübergangstemperatur wird als Mittelpunkt dieser Stufe ausgewertet. Eine Schmelztemperatur ist als Peak im Thermogramm erkennbar. Als Schmelztemperatur wird diejenige Temperatur notiert, bei der die höchste Wärmetönung auftritt.

### Dichte

Die Dichte wird gemessen nach ASTM D 792.

### Molekulargewichtsbestimmung

Die Molekulargewichtsbestimmungen der gewichtsmittleren Molekulargewichte Mw erfolgten mittels Gelpermeationschromatographie (GPC). Als Eluent wurde THF (Tetrahydrofuran) mit 0,1 Vol. % Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

## Patentansprüche

1. Klebeband mit einem Träger aus einer Folie, auf die zumindest einseitig eine Klebemasse aufgebracht ist, wobei
die Folie eine monoaxial gereckte Folie ist, die zu mindestens 95 Gew.-%, vorzugsweise zu 99 Gew.-%, weiter vorzugsweise zu 100 Gew.-% aus Propylenpolymerzusammensetzung mit verschiedenen Phasen besteht, die die folgenden Komponenten umfasst:
i) 93 bis 96 Gew.-% auf das Gesamtgewicht der Komponenten i) und ii) bezogen, einer Propylenpolymermatrix, die ein Propylenhomopolymer und weiter vorzugsweise ein bevorzugt statistisches Propylencopolymer umfasst, das ein Comonomer aufweist, das aus Ethylen oder C₄- bis C₁₀-α-Olefinen ausgewählt ist, wobei die Propylenpolymermatrix einen Comonomergehalt von nicht mehr als 15 Gew.-% aufweist;
ii) 4 bis 7 Gew.-% auf das Gesamtgewicht der Komponenten i) und ii) bezogen, eines Elastomers in Form eines Ethylen-Propylen-Copolymers mit einem Ethylengehalt von 50 bis 90 Gew.-%.

2. Klebeband nach Anspruch 1,
**dadurch gekennzeichnet, dass**
die Propylenpolymerzusammensetzung nur aus den Komponenten i) und ii) besteht.

3. Klebeband nach Anspruch 1 oder 2,
**dadurch gekennzeichnet, dass**
sich die Anteile in Komponente i) an Propylenhomopolymer und an Propylencopolymer wie folgt verteilen:
70 bis 99 Gew.-% Propylenhomopolymer und
1 bis 30 Gew.-% Propylencopolymer

4. Klebeband nach zumindest einem der Ansprüche 1 bis 3,
**dadurch gekennzeichnet, dass**
die Propylenpolymermatrix einen Schmelzflußindex MFI von 0,5 bis 10 g/10 min (gemessen gemäß ISO 1133 bei 230 °C und unter einem Gewicht von 2,16 kg) sowie einen -E-Modul von 1000 bis 1300 MPa aufweist.

5. Klebeband nach zumindest einem der vorherigem Ansprüche
**dadurch gekennzeichnet, dass**
das Polypropylenhomopolymer ein Granulat ist, welches als Polymer nur Polypropylen enthält.

6. Klebeband nach zumindest einem der vorherigem Ansprüche
**dadurch gekennzeichnet, dass**
im Propylencopolymer als Comonomer Ethylen gewählt mit einem Ethylen-Propylen Verhältnis von 0,9:1 bis 1,1:1 wird.

7. Klebeband nach zumindest einem der vorherigem Ansprüche
**dadurch gekennzeichnet, dass**
im Elastomer in Form eines Ethylen-Propylen-Copolymers der Ethylengehalt 55 bis 80 Gew.-% besonders bevorzugt 65 bis 75 Gew.-% beträgt.

8. Klebeband nach zumindest einem der vorherigem Ansprüche
**dadurch gekennzeichnet, dass**
der Schmelzpunkt (DSC) des Elastomers kleiner 70 °C ist.

9. Klebeband nach zumindest einem der vorherigem Ansprüche
**dadurch gekennzeichnet, dass**
der Kristallinitätsgrad der Komponente ii) 0,1 beträgt.

10. Klebeband nach zumindest einem der vorherigem Ansprüche
**dadurch gekennzeichnet, dass**
das Reckverhältnis bei der Reckung der extrudierten Primärfolie in Längsrichtung 1:5 bis 1:9 beträgt, bevorzugt 1:6 bis 1:8.

11. Klebeband nach zumindest einem der vorherigem Ansprüche
**dadurch gekennzeichnet, dass**
die Foliendicke nach dem Recken zwischen 40 und 150 µm, vorzugsweise 50 bis 100 µm liegt.

12. Klebeband nach zumindest einem der vorherigem Ansprüche
**dadurch gekennzeichnet, dass**
die Klebemasse aus der Gruppe der Naturkautschuke oder aus einem beliebigen Blend aus Naturkautschuken und Synthesekautschuken gewählt ist.

13. Klebband nach zumindest einem der vorherigen Ansprüche,
**dadurch gekennzeichnet, dass**
als Klebharze solche auf Basis von hydrierten, teilhydrierten oder nicht hydrierten Kohlenwasserstoffharzen, Terpenphenolen und Kolophoniumestern eingesetzt werden.

14. Klebband nach zumindest einem der vorherigen Ansprüche,
**dadurch gekennzeichnet, dass**
die Klebemasse zumindest ein UV-Schutzmittel und/oder weitere Abmischkomponenten enthält, insbesondere Weichmacher, Alterungsschutzmittel, Verarbeitungshilfsmittel, Füllstoffe, Farbstoffe, optische Aufheller, Stabilisatoren, Endblockverstärkerharze.

15. Verwendung des Klebebandes nach zumindest einem der vorherigen Ansprüche als Fixierungsklebeband zum Sichern von beweglichen Teilen an Druckern, Kopiergeräten, Haushaltsgeräten wie Kühl- und Gefriergeräten, Elektro- und Gasherden sowie Möbeln.

16. Verwendung des Klebebandes nach zumindest einem der vorherigen Ansprüche als Strapping-Klebeband zum Bündeln und Palettieren von Kartonagen und anderen Gütern.

## Claims

1. Adhesive tape having a carrier composed of a film bearing on at least one side an applied adhesive, where the film is a monoaxially oriented film which consists to an extent of at least 95 wt%, preferably 99 wt%, more preferably 100 wt%, of propylene polymer composition which has different phases and which comprises the following components:
i) 93 to 96 wt%, based on the total weight of components i) and ii), of a propylene polymer matrix which comprises a propylene homopolymer and further preferably a preferably random propylene copolymer having a comonomer which is selected from ethylene or C₄ to C₁₀ α-olefins, the comonomer content of the propylene polymer matrix being not more than 15 wt%;
ii) 4 to 7 wt%, based on the total weight of components i) and ii), of an elastomer in the form of an ethylene-propylene copolymer having an ethylene content of 50 to 90 wt%.

2. Adhesive tape according to Claim 1,
**characterized in that**
the propylene polymer composition consists only of components i) and ii).

3. Adhesive tape according to Claim 1 or 2, **characterized in that**
the fractions of propylene homopolymer and of propylene copolymer in component i) are distributed as follows:
70 to 99 wt% propylene homopolymer and
1 to 30 wt% propylene copolymer.

4. Adhesive tape according to at least one of Claims 1 to 3,
**characterized in that**
the propylene polymer matrix has a melt flow index MFI of 0.5 to 10 g/10 min (measured according to ISO 1133 at 230°C and under a weight of 2.16 kg) and also an elasticity modulus of 1000 to 1300 MPa.

5. Adhesive tape according to at least one of the preceding claims,
**characterized in that**
the polypropylene homopolymer comprises granules whose only polymer is polypropylene.

6. Adhesive tape according to at least one of the preceding claims,
**characterized in that**
ethylene is selected as comonomer in the propylene copolymer, with an ethylene-propylene ratio of 0.9:1 to 1.1:1.

7. Adhesive tape according to at least one of the preceding claims,
**characterized in that**
the ethylene content in the elastomer in the form of an ethylene-propylene copolymer is 55 to 80 wt%, more preferably 65 to 75 wt%.

8. Adhesive tape according to at least one of the preceding claims,
**characterized in that**
the melting point (DSC) of the elastomer is less than 70°C.

9. Adhesive tape according to at least one of the preceding claims,
**characterized in that**
the degree of crystallinity of component ii) is 0.1.

10. Adhesive tape according to at least one of the preceding claims,
**characterized in that**
the draw ratio on orientation of the extruded primary film in longitudinal direction is 1:5 to 1:9, preferably 1:6 to 1:8.

11. Adhesive tape according to at least one of the preceding claims,
**characterized in that**
the film thickness after orientation is between 40 and 150 µm, preferably 50 to 100 µm.

12. Adhesive tape according to at least one of the preceding claims,
**characterized in that**
the adhesive is selected from the group of the natural rubbers or from any desired blend of natural rubbers and synthetic rubbers.

13. Adhesive tape according to at least one of the preceding claims,
**characterized in that**
tackifier resins used are resins based on hydrogenated, part-hydrogenated or unhydrogenated hydrocarbon resins, terpene-phenols and rosin esters.

14. Adhesive tape according to at least one of the preceding claims,
**characterized in that**
the adhesive comprises at least one UV stabilizer and/or other blending components, more particularly plasticizers, aging inhibitors, processing assistants, fillers, dyes, optical brighteners, stabilizers, endblock reinforcer resins.

15. Use of the adhesive tape according to at least one of the preceding claims as adhesive fastening tape for securing movable parts on printers, copiers, household appliances such as refrigerators and freezers, electric and gas ovens, and furniture.

16. Use of the adhesive tape according to at least one of the preceding claims as adhesive strapping tape for bundling and palletizing cardboard-boxed items and other goods.

## Revendications

1. Bande adhésive munie d'un support en un film, sur lequel une masse adhésive est appliquée au moins d'un côté, dans laquelle
le film est un film étiré monoaxialement, qui est constitué à hauteur d'au moins 95 % en poids, de préférence à hauteur de 99 % en poids, de manière davantage préférée à hauteur de 100 % en poids, par une composition de polymère de propylène contenant différentes phases, qui comprend les composants suivants :
i) 93 à 96 % en poids, par rapport au poids total des composants i) et ii), d'une matrice de polymère de propylène, qui comprend un homopolymère de propylène et de manière davantage préférée un copolymère de propylène de préférence statistique, qui comprend un comonomère qui est choisi parmi l'éthylène ou des α-oléfines en C₄ à C₁₀, la matrice de polymère de propylène présentant une teneur en comonomère inférieure ou égale à 15 % en poids ;
ii) 4 à 7 % en poids, par rapport au poids total des composants i) et ii), d'un élastomère sous la forme d'un copolymère d'éthylène-propylène ayant une teneur en éthylène de 50 à 90 % en poids.

2. Bande adhésive selon la revendication 1, **caractérisée en ce que** la composition de polymère de propylène est constituée uniquement par les composants i) et ii).

3. Bande adhésive selon la revendication 1 ou 2, **caractérisée en ce que** les proportions dans le composant i) d'homopolymère de propylène et de copolymère de propylène sont réparties de la manière suivante :
70 à 99 % en poids d'homopolymère de propylène et
1 à 30 % en poids de copolymère de propylène.

4. Bande adhésive selon au moins l'une quelconque des revendications 1 à 3, **caractérisée en ce que** la matrice de polymère de propylène présente un indice de fluidité à chaud MFI de 0,5 à 10 g/10 min (mesuré selon ISO 1133 à 230 °C et sous un poids de 2,16 kg), ainsi qu'un module E de 1 000 à 1 300 MPa.

5. Bande adhésive selon au moins l'une quelconque des revendications précédentes, **caractérisée en ce que** l'homopolymère de polypropylène est un granulat qui contient uniquement du polypropylène en tant que polymère.

6. Bande adhésive selon au moins l'une quelconque des revendications précédentes, **caractérisée en ce que** l'éthylène est choisi en tant que comonomère dans le copolymère de propylène, avec un rapport éthylène-propylène de 0,9:1 à 1,1:1.

7. Bande adhésive selon au moins l'une quelconque des revendications précédentes, **caractérisée en ce que**, dans l'élastomère sous la forme d'un copolymère d'éthylène-propylène, la teneur en éthylène est de 55 à 80 % en poids, de manière particulièrement préférée de 65 à 75 % en poids.

8. Bande adhésive selon au moins l'une quelconque des revendications précédentes, **caractérisée en ce que** le point de fusion (DSC) de l'élastomère est inférieur à 70 °C.

9. Bande adhésive selon au moins l'une quelconque des revendications précédentes, **caractérisée en ce que** le degré de cristallinité du composant ii) est de 0,1.

10. Bande adhésive selon au moins l'une quelconque des revendications précédentes, **caractérisée en ce que** le taux d'étirement lors de l'étirement du film primaire extrudé dans la direction longitudinale est de 1:5 à 1:9, de préférence de 1:6 à 1:8.

11. Bande adhésive selon au moins l'une quelconque des revendications précédentes, **caractérisée en ce que** l'épaisseur de film après l'étirement est comprise entre 40 et 150 µm, de préférence est de 50 à 100 µm.

12. Bande adhésive selon au moins l'une quelconque des revendications précédentes, **caractérisée en ce que** la masse adhésive est choisie dans le groupe des caoutchoucs naturels ou parmi un mélange quelconque de caoutchoucs naturels et de caoutchoucs de synthèse.

13. Bande adhésive selon au moins l'une quelconque des revendications précédentes, **caractérisée en ce qu'**en tant que résines adhésives, des résines adhésives à base de résines hydrocarbonées hydrogénées, partiellement hydrogénées ou non hydrogénées, de terpène-phénols et d'esters de colophane sont utilisées.

14. Bande adhésive selon au moins l'une quelconque des revendications précédentes, **caractérisée en ce que** la masse adhésive contient au moins un agent de protection contre les UV et/ou d'autres composants de mélange, notamment des plastifiants, des agents antivieillissement, des adjuvants d'usinage, des charges, des colorants, des azurants optiques, des stabilisateurs, des résines de renforcement de séquences terminales.

15. Utilisation de la bande adhésive selon au moins l'une quelconque des revendications précédentes en tant que bande adhésive de fixation pour la sécurisation de parties mobiles dans des imprimantes, des photocopieuses, des appareils ménagers tels que des réfrigérateurs et des congélateurs, des cuisinières électriques et à gaz, ainsi que des meubles.

16. Utilisation de la bande adhésive selon au moins l'une quelconque des revendications précédentes en tant que bande adhésive de cerclage pour la liaison et la mise sur palette de cartons et d'autres articles.
